# EUROPÄISCHE PATENTSCHRIFT

(11) **EP 4 161 816 B1**
(45) Veröffentlichungstag und Bekanntmachung des Hinweises auf die Patenterteilung: **24.01.2024**
(21) Anmeldenummer: 21730138.1
(22) Anmeldetag: 27.05.2021
(51) Int. Cl.: B62D 1/181, B62D 1/183, B62D 1/185

(54) **LENKSÄULE FÜR EIN KRAFTFAHRZEUG**
STEERING COLUMN FOR A MOTOR VEHICLE
COLONNE DE DIRECTION POUR UN VÉHICULE À MOTEUR

(30) Priorität: 03.06.2020 DE 102020206955
(43) Veröffentlichungstag der Anmeldung: 12.04.2023
(73) Patentinhaber: thyssenkrupp Presta AG, 9492 Eschen (LI); thyssenkrupp AG, 45143 Essen (DE)
(72) Erfinder: DEEG, Benjamin, 6850 Dornbirn (AT); CARON, Eric, 6800 Feldkirch (AT)
(74) Vertreter: thyssenkrupp Intellectual Property GmbH
(86) Internationale Anmeldenummer: PCT/EP2021/064154
(87) Internationale Veröffentlichungsnummer: WO 2021/244931

(56) Entgegenhaltungen:
- DE-A1-102015 000 027
- DE-A1-102018 211 041
- US-A1- 2019 111 960
- US-A1- 2019 322 307

## Beschreibung

### Stand der Technik

Die Erfindung betrifft eine Lenksäule für ein Kraftfahrzeug, umfassend eine Manteleinheit, in der eine Lenkspindel um eine in Längsrichtung erstreckte Längsachse drehbar gelagert ist und die mindestens zwei in Längsrichtung um einen Verstellweg relativ zueinander verstellbar geführte Mäntel aufweist, wobei in einem als Übergangsabschnitt ausgebildeten Teilabschnitt des Verstellwegs die Mäntel mit einem größeren Spiel geführt sind als in einem als Funktionalabschnitt ausgebildeten Teilabschnitt des Verstellwegs.

Eine Lenksäule für ein Kraftfahrzeug weist eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist in einer Manteleinheit drehbar gelagert, mit der sie zusammen eine Stelleinheit bildet. Die Manteleinheit wird von einer an der Fahrzeugkarosserie befestigten Trageinheit gehalten. Verstellbare Lenksäulen ermöglichen durch eine Verstellung der Manteleinheit relativ zur Trageinheit die Einstellung der Lenkradposition relativ zur Fahrzeugkarosserie.

Es ist bekannt, die Lenksäule in Längsrichtung, d.h. in Achsrichtung der Lenkspindel bzw. in Richtung der Längsachse, verstellbar zu gestalten, um im manuellen Fahrbetrieb das Lenkrad in Bedienposition für einen bequemen manuellen Lenkeingriff an die Fahrerposition anzupassen. Bei autonom fahrenden Fahrzeugen kann im autonomen Fahrbetrieb, wenn kein manueller Lenkeingriff erfolgt, die Lenksäule durch weitere Verstellung in Längsrichtung aus der Bedienposition heraus weiter zusammen geschoben werden, um das Lenkrad in eine Verstauposition außerhalb der Bedienposition zu bringen und den Fahrzeuginnenraum für eine anderweitige Nutzung freizugeben.

Zur Längsverstellung und zum Verstauen ist beispielsweise aus der DE 10 2018 211 041 A1 eine Manteleinheit mit einer teleskopartigen Anordnung von Mänteln bekannt. Diese Mäntel umfassen ein in Fahrtrichtung vorn an der Karosserie abgestütztes, äußeres Mantelrohr, auch als unterer Mantel bezeichnet, in das ein als inneres Mantelrohr ausgebildeter oberer Mantel in Längsrichtung teleskopartig verstellbar eintaucht. Zur Längsverstellung ist ein motorischer Verstellantrieb vorgesehen, der als Spindeltrieb ausgebildet ist und in Längsrichtung an den Mantelrohren angreift. Aus der Verstauposition, in der die Mäntel so weit wie möglich ineinander eingefahren sind, kann mittels des Verstellantriebs eine maximale Verstellung bis in eine fahrerseitige Endposition erfolgen, in der die Mäntel maximal bis zu einem Endanschlag auseinandergezogen sind. Der maximale mögliche Verstellbereich zwischen Verstauposition und Endposition definiert den Verstellweg der Lenksäule.

Im manuellen Fahrbetrieb wird die Lenksäule so eingestellt, dass sich das Lenkrad in einer individuellen Bedienposition innerhalb eines Bedienbereichs befindet, welcher einen Verstellbereich von zur Eingabe von Lenkbefehlen ergonomisch sinnvollen Bedienpositionen bezeichnet. Der Bedienbereich wird durch einen definierten Funktionalabschnitt der Verstellung bereitgestellt, und auch als Komfortbereich bezeichnet. Ein weiterer Funktionalabschnitt der Verstellung kann sich im Bereich der Verstauposition befinden. Der Teilbereich des Verstellwegs, der sich im Übergang zwischen dem Bedienbereich und der Verstauposition befindet, bildet einen Übergangsabschnitt der Verstellung.

Um eine möglichst hohe Steifigkeit und Eigenfrequenz der Lenksäule zumindest im Bedienbereich, und gegebenenfalls im Verstaubereich zu gewährleisten, ist es aus der DE 10 2018 211 041 A1 bekannt, die Mäntel in diesem Funktionalabschnitt als Mantelrohre mit geringem Führungsspiel passgenau ineinander zu führen. Durch die spielarme Führung entstehen beim Verstellen relativ hohe Reibungskräfte, die vom Verstellantrieb überwunden werden müssen. Zur Einstellung der Lenkradposition ist dabei nur eine geringe Verstellgeschwindigkeit erforderlich, so dass ein vorteilhaft kompakter und leichter Verstellantrieb mit geringer Antriebsleitung ausreichend ist. Um mit dieser geringen Antriebsleistung auch eine relativ hohe Verstellgeschwindigkeit beim Verstauen zu ermöglichen, wird in der DE 10 2018 211 041 A1 vorgeschlagen, im Übergangsabschnitt der Verstellung das Führungsspiel zwischen den Mantelrohren zu vergrößern, wodurch die Reibung vermindert wird. Da der Übergangsabschnitt nur beim Übergang außerhalb des Funktionsabschnitts durchlaufen wird, ist dort eine geringere Steifigkeit akzeptabel. Die praktische Realisierung erfordert jedoch eine aufwendige Bearbeitung der Mäntel zur Ausbildung von Funktions- und Übergangsabschnitten mit unterschiedlichen Abmessungen und Passungen der Mantelrohre, und eine individuelle Gestaltung der Mantelrohre zum Einsatz in Lenksäulen mit unterschiedlich langen Bedien- und Übergangsbereichen.

Angesichts der vorangehend erläuterten Problematik ist es eine Aufgabe der vorliegenden Erfindung, eine angepasste Führung mit geringerem Aufwand und erhöhter Flexibilität zu ermöglichen.

### Darstellung der Erfindung

Diese Aufgabe wird erfindungsgemäß gelöst durch die Lenksäule mit den Merkmalen des Anspruchs 1. Vorteilhafte Weiterbildungen ergeben sich aus den Unteransprüchen.

Bei einer Lenksäule für ein Kraftfahrzeug, umfassend eine Manteleinheit, in der eine Lenkspindel um eine in Längsrichtung erstreckte Längsachse drehbar gelagert ist und die mindestens zwei in Längsrichtung um einen Verstellweg relativ zueinander verstellbar geführte Mäntel aufweist, wobei in einem als Übergangsabschnitt ausgebildeten Teilabschnitt des Verstellwegs die Mäntel mit einem größeren Spiel geführt sind als in einem als Funktionalabschnitt ausgebildeten Teilabschnitt des Verstellwegs, wird erfindungsgemäß vorgeschlagen, dass ein Mantel eine Führungsbahn aufweist, und ein anderer Mantel ein Führungselement aufweist, welches in Längsrichtung geführt in die Führungsbahn eingreift und dabei in der Führungsbahn ein Führungsspiel hat, welches in einem Übergangsabschnitt größer ist als in einem Funktionalabschnitt.

Gemäß der Erfindung wird die Führung nicht wie im Stand der Technik durch die Mantelrohre selbst, sondern durch eine funktional davon unabhängig an den Mänteln bereitgestellte Führungseinrichtung erzeugt. Konkret kann hierzu an einem der Mäntel eine in Längsrichtung langgestreckte Führungsbahn fixiert sein, und an einem anderen Mantel ein mit dieser Führungsbahn korrespondierendes, in einem Führungseingriff zusammenwirkendes Führungselement. Durch das Zusammenwirken von Führungsbahn und Führungselement kann eine Zwangsführung in Längsrichtung bereitgestellt werden, welche unabhängig von der sonstigen Ausgestaltung der Mäntel optimierbar ist bezüglich ihrer spezifischen Führungscharakteristik über den Verstellweg. So kann beispielsweise das zwischen Führungsbahn und Führungselement bestehende Führungsspiel abschnittweise vergrößert sein, um in einem Übergangsabschnitt einen spielhaltigen, losen Formschluss zu erzeugen, der eine geringe Reibung bezüglich einer relative Verstellung der Mäntel hat. Ebenso kann allein durch eine spielarme, passgenaue Abstimmung von Führungsbahn und Führungselement eine steife Verbindung der Mäntel in einem Funktionsabschnitt erzeugt werden. Die Führungsbahn und das Führungselement können mit geringerem Aufwand gefertigt und angepasst werden, um beispielsweise unterschiedlich lange Funktional- und Übergangsabschnitte bereitzustellen, als dies durch die Bearbeitung der Mantelrohre im Stand der Technik erforderlich wäre. Dadurch kann der Fertigungsaufwand reduziert und die Flexibilität des Einsatzes erhöht werden.

Die Mäntel können mindestens einen oberen Mantel und einen unteren Mantel umfassen. Der obere Mantel bezeichnet den bezüglich der Fahrtrichtung hinteren, fahrerseitigen Mantel, und der untere Mantel den in Fahrtrichtung vorderen, fahrzeug- bzw. karosserieseitigen Mantel. In der Manteleinheit kann zwischen den beiden Mänteln mindestens ein in Längsrichtung vorzugsweise teleskopartig verstellbares Zwischenmantel eingesetzt sein, zur Realisierung eines Mehrfachauszugs mit großem Verstellbereich. Erfindungsgemäße Führungsbahnen und Führungselemente können an den Mänteln und Zwischenmänteln angeordnet sein.

In einer vorteilhaften Weiterbildung ist die Führungsbahn und das Führungselement derart ausgebildet, dass im Übergangsabschnitt und im Funktionalabschnitt eine Verstellung beschädigungsfrei erfolgt, sprich die Führungsbahn und das Führungselement nach einer Verstellung zueinander unbeschädigt sind, d.h. im Wesentlichen keine bleibende Verformung erfolgt, welche die Führungsfunktion merklich beeinflusst. Der Verschleiß aufgrund des Gleitkontakts nach einer Vielzahl von Verstelloperationen ist hierbei nicht als Beschädigung zu verstehen. Mit anderen Worten erfolgt zwischen dem Führungselement und der Führungsbahn keine Energieabsorption durch plastische Verformung,um einen unfallbedingte Energieeintrag in Verformungsarbeit abzubauen.

In einer vorteilhaften Weiterbildung stehen die Führungsbahn und das Führungselement im Übergangsabschnitt außer Kontakt miteinander, sprich diese berühren sich nicht. Es kann beispielsweise eine spielhaltige Gleitführung ausgebildet sein.

Die Mäntel können teleskopierbare Mantelrohre umfassen. Eine Teleskopanordnung der Manteleinheit umfasst mindestens ein Außenmantelrohr und ein darin in Längsrichtung teleskopierbares Innenmantelrohr, und in einem Mehrfachteleskop ein oder mehrere dazwischen eingesetzte Zwischenmantelrohre. Die Mantelrohre können einen kreisrunden, ovale oder mehreckigen Querschnitt haben. Jeweils eine erfindungsgemäße Führungsbahn und ein Führungselement können miteinander korrespondierend innen an einem äußeren Mantel und außen an einem darin eintauchenden inneren Mantel angeordnet sein. Ein Vorteil ist, dass Mantelrohre mit unterschiedlichem Querschnitt und unterschiedlichen Abmessung mit geringem konstruktiven und baulichen Aufwand mit einer erfindungsgemäßen Führungseinrichtung ausgestaltet werden können.

Es ist vorteilhaft, dass die Führungsbahn und das Führungselement einen in Umfangsrichtung wirksamen Formschluss ausbilden. Ein Formschluss in Umfangsrichtung kann beispielsweise durch einen Eingriff zwischen Führungselement und Führungsbahn in radialer Richtung bezüglich der Längsachse erzeugt werden. Dadurch kann eine Verdrehsicherung zwischen den Mänteln erzeugt werden.

Es ist möglich, dass das Führungsspiel zwischen der Führungsbahn und dem Führungselement im Umfangsrichtung besteht. Ein derartiges Führungsspiel kann mit vorteilhaft geringem Aufwand beispielsweise bei einem in Umfangsrichtung wirksamen Formschluss ausgebildet sein. Zur Ausbildung eines Übergangsbereichs kann ein loser Formschluss mit relativ großem Führungsspiel durch einen Luftspalt zwischen Führungsbahn und -element realisiert sein, wogegen in einem Funktionalbereich ein geringes Spiel zwischen in Umfangsrichtung gegeneinander gerichteten Führungsflächen von Führungsbahn und -element vorgegeben wird, beispielsweise auch durch eine spielarme oder spielfreie Verspannung der Führungsflächen mittels einer Vorspannkraft. Das radiale Spiel zwischen den Mänteln, beispielsweise zwischen den teleskopierenden Mantelrohren, kann unverändert beibehalten werden, so dass der Fertigungsaufwand geringer sein kann als bei der im Stand der Technik für das unterschiedliche Radialspiel erforderlichen Bearbeitung der Mantelrohre zur Bereitstellung von Funktional- und Übergangsabschnitten.

Eine vorteilhafte Ausführung der Erfindung kann vorsehen, dass die Führungsbahn eine langgestreckte Führungsnut aufweist, in die ein Führungsvorsprung des Führungselements eingreift, und die abschnittweise einen kleinere Nutweite hat. Die Führungsnut ist in Längsrichtung erstreckt, und radial bezüglich der Längsachse offen. Der korrespondierende Führungsvorsprung kann beispielsweise zapfen- oder stegförmig sein und radial in die Führungsnut hineinragen. Die Führungsnut ist in Längsrichtung und bevorzugt auch in Umfangsrichtung fixiert außen an einem inneren Mantel oder innen an einem äußeren Mantel angebracht, und der korrespondierende Führungsvorsprung entsprechend radial gegenüberliegend an dem jeweils anderen Mantel. Durch eine verringerte Nutweite (Nutbreite) der Führungsnut in einem Teilabschnitt wird das seitliche Führungsspiel, d.h. das in Umfangsrichtung zwischen den Nutflanken der Führungsnut und dem Führungsvorsprung bestehende Führungsspiel verringert und ein Funktionalabschnitt bereitgestellt. Außerhalb eine derartigen Funktionalabschnitts kann einfach durch eine größere Nutweite ein Übergangsabschnitt mit größerem Führungsspiel bereitgestellt werden, in dem der Führungsvorsprung seitlich, also in Umfangsrichtung einen Luftspalt zu den Nutflanken hat, so dass ein loser Formschluss besteht. Dabei ist vorteilhaft, dass eine Führungsnut mit unterschiedlicher Nutweite mit geringem Aufwand erzeugt werden kann. Es kann eine im Betrieb zuverlässige und präzise Längsführung gewährleistet werden.

Die Führungsnut kann endseitig geschlossen sein, um einen Längsanschlag für den Führungsvorsprung bereitzustellen, bevorzugt an beiden Enden, oder auch nur an einem Ende.

Es kann vorgesehen sein, dass die Führungsbahn einen langgestreckten Führungsvorsprung aufweist, der in eine Führungsausnehmung des Führungselements eingreift, und der abschnittweise eine größere Stegbreite hat. Der Führungsvorsprung ist in Längsrichtung erstreckt, und steht radial bezüglich der Längsachse vor, und kann beispielsweise steg- oder schienenartig ausgebildet sein. Die korrespondierende Führungsausnehmung kann beispielsweise nutförmig sein und den Führungsvorsprung umgreifen, d.h. der Führungsvorsprung ragt radial in die Führungsausnehmung hinein. Der Führungsvorsprung ist in Längsrichtung und bevorzugt auch in Umfangsrichtung fixiert außen an einem inneren Mantel oder innen an einem äußeren Mantel angebracht, und die korrespondierende Führungsausnehmung entsprechend radial gegenüberliegend an dem jeweils anderen Mantel. Durch eine verringerte Breite des Führungsvorsprungs in einem Teilabschnitt kann das seitliche Führungsspiel, also das in Umfangsrichtung zwischen den Nutflanken der Führungsnut und dem Führungsvorsprung bestehende Spiel verringert und ein Funktionalabschnitt bereitgestellt werden. Außerhalb eine derartigen Funktionalabschnitts kann einfach durch eine kleinere Breite ein Übergangsabschnitt mit größerem Führungsspiel bereitgestellt werden, in dem der Führungsvorsprung seitlich, also in Umfangsrichtung einen Luftspalt zu den Flanken der Führungsausnehmung hat, so dass ein loser Formschluss besteht. Dabei ist vorteilhaft, dass ein Führungsvorsprung mit unterschiedlicher Breite mit geringem Aufwand erzeugt werden kann. Es kann eine im Betrieb zuverlässige und präzise Längsführung gewährleistet werden

Es ist möglich, dass ein geringeres Führungsspiel in einem Endabschnitt oder in beiden Endabschnitten der Führungsbahn ausgebildet ist. Die Länge der Führungsbahn ist so bemessen, dass das Führungselement um den Verstellweg der Manteleinheit darin entlangbewegt werden kann. Durch das abschnittweise geringere Führungsspiel kann ein Funktionalabschnitt in dem Endbereich der Führungsbahn gebildet sein, indem sich das Führungselement befindet, wenn der Bedienbereich der Lenksäule eingestellt ist, also die Mäntel auseinandergezogen sind. Es kann auch vorgesehen sein, dass in dem anderen Endabschnitt, welcher der zusammengeschobenen Verstauposition der Mäntel entspricht ebenfalls ein Funktionalabschnitt realisiert wird, um eine sichere und vibrationsfreie Fixierung in der Verstauposition zu ermöglichen.

Es kann bevorzugt vorgesehen sein, dass die Führungsbahn einen Führungsbahnkörper und/oder das Führungselement einen Führungselementkörper aufweisen, der an einem Mantel angebracht oder ausgebildet ist. Der Führungsbahnkörper ist in Längsrichtung langgestreckt ausgebildet, und kann beispielsweise einen Profilkörper mit einer Führungsnut oder/und einem Führungsvorsprung umfassen. Damit korrespondierend kann der Führungselementkörper mit einem Führungsvorsprung oder einer Führungsausnehmung ausgebildet sein.

Eine vorteilhafte Ausführung ist, dass der Führungsbahnkörper und/oder der Führungselementkörper separat ausgebildet und mit einem Mantel verbunden ist. Dadurch kann die Länge von Funktional- und Übergangsabschnitten erfindungsgemäß an dem Führungsbahnkörper und/oder dem Führungselementkörper zunächst unabhängig von der Mantelrohranordnung vorgegeben werden. Anschließend kann die Fixierung an den Mänteln erfolgen, wodurch die Manteleinheit mit einer vorgegebenen Führungscharakteristik ausgestattet werden kann. Ein Vorteil ist, dass unterschiedliche Führungscharakteristiken allein durch entsprechende Anpassung der Führung erfolgen können, bei ansonsten unveränderten Mänteln. Dadurch kann der Konstruktions-, Fertigungs- und Lageraufwand verringert, und die Flexibilität der Anwendung erhöht werden.

Die Verbindung zwischen Führungsbahn- und/oder Führungselementkörper und einem Mantelrohr kann mittels Befestigungselementen oder sonstiger bevorzugt form- und/oder stoffschlüssiger Verbindungsverfahren erfolgen.

Es ist auch denkbar und möglich einen Führungsbahnkörper und/oder einen Führungselementkörper integriert mit einem Mantel auszubilden, beispielsweise einstückig, oder eine Kombination aus separaten und integrierten Führungsbahn- und Führungselementkörpern vorzusehen.

Es kann weiterhin vorteilhaft sein, dass der Führungsbahnkörper und/oder der Führungselementkörper aus einem von einem Mantel unterschiedlichen Material ausgebildet sind. Dadurch kann beispielsweise eine optimierte Gleitführung zwischen Führungsbahn und Führungselement realisiert werden. Während die Mäntel zumeist aus Stahl-, Aluminium- oder Magnesiumlegierungen gefertigt sind, können die Führungsbahnen oder -elemente ein Buntmetall, oder bevorzugt einen Kunststoff umfassen. Durch die guten Gleit- und Führungseigenschaften einer derartigen Materialpaarung kann eine spielarme und steife, und dabei leichtgängig verstellbare Führung bereitgestellt werden.

Zur Verstellung kann ein motorischer Verstellantrieb vorgesehen sein, der derart mit den Mänteln gekoppelt ist, um die Mäntel relativ zueinander zu verstellen, zumindest in Längsrichtung. Der Verstellantrieb kann beispielsweise einen Spindeltrieb umfassen, mit einer auf einer Gewindespindel angeordneten Spindelmutter, und einem elektrischen Antriebsmotor, von dem die Gewindespindel und die Spindelmutter relativ zueinander drehend antreibbar sind. Derartige Verstellantriebe sind im Stand der Technik prinzipiell bekannt und gelten als zuverlässig und robust. Dabei ist die Spindelmutter an dem einen Mantel in Längsrichtung unverschieblich angebracht, und die Gewindespindel an dem dazu teleskopierbaren anderen Mantelrohr. Von einem Antriebsmotor wird über ein geeignetes Getriebe, beispielsweise ein Schnecken- oder Riemengetriebe, die Spindelmutter oder die Gewindespindel drehend angetrieben, wodurch die relativ dazu bezüglich der Drehung feststehende Gewindespindel oder Spindelmutter translatorisch in Richtung der Spindelachse bewegt wird, und je nach relativer Drehrichtung die Mäntel in Längsrichtung zusammen- oder auseinandergefahren werden.

Eine vorteilhafte Weiterbildung kann vorsehen, dass zwischen der Führungsbahn oder dem Führungselement und einem Mantel eine Energieabsorptionseinrichtung angeordnet ist. Somit erfolgt die Energieabsorption nicht zwischen der Führungsbahn und dem Führungselement, sondern kraftflussmäßig und/oder räumlich zwischen der Führungsbahn oder dem Führungselement und einem der Mäntel. Beispielsweise kann hierzu vorgesehen sein, dass an sich bekannte Energieabsorptionselemente, beispielsweise Dehnungs-, Biege- Quetsch- und/oder Reißelemente, die bei einer nur im Crashfall auftretenden Relativbewegung der Mäntel in Längsrichtung unter Energieabsorption plastisch deformiert werden. Dadurch kann ein im Crashfall auf das Lenkrad aufprallender Körper definiert abgebremst werden, um die Verletzungsgefahr zu reduzieren.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: die Lenksäule gemäß Figur 1 in einer weiteren perspektivischen Ansicht,
- Figur 3: die Lenksäule gemäß Figur 2 in einer teilweise auseinander gezogenen Ansicht,
- Figur 4: einen vergrößerten Ausschnitt von Figur 3,
- Figur 5: einen Querschnitt Q-Q durch die Lenksäule gemäß Figur 2 und 6,
- Figur 6: die Lenksäule gemäß Figur 1 und 2 in einer teilweise aufgeschnittenen Seitenansicht,
- Figur 7: eine vergrößerte Detailansicht der Führungseinrichtung von Figur 6
- Figur 8: eine Führungseinrichtung in einer zweiten Ausführung in einer Ansicht analog zu Figur 7.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

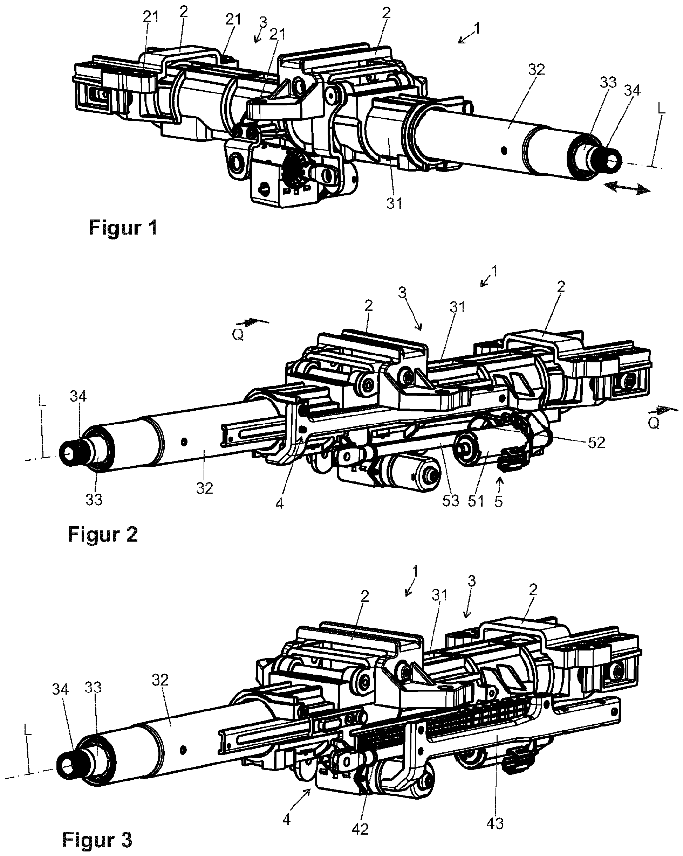

Figuren 1 und 2 zeigen eine erfindungsgemäße Lenksäule 1 in verschiedenen perspektivischen Ansichten von schräg links hinten (Figur 1) und schräg rechts hinten (Figur 2), bezogen auf die Fahrtrichtung, und in Figur 3 in einer teilweise quer zur Fahrtrichtung auseinander gezogenen Explosionsdarstellung.

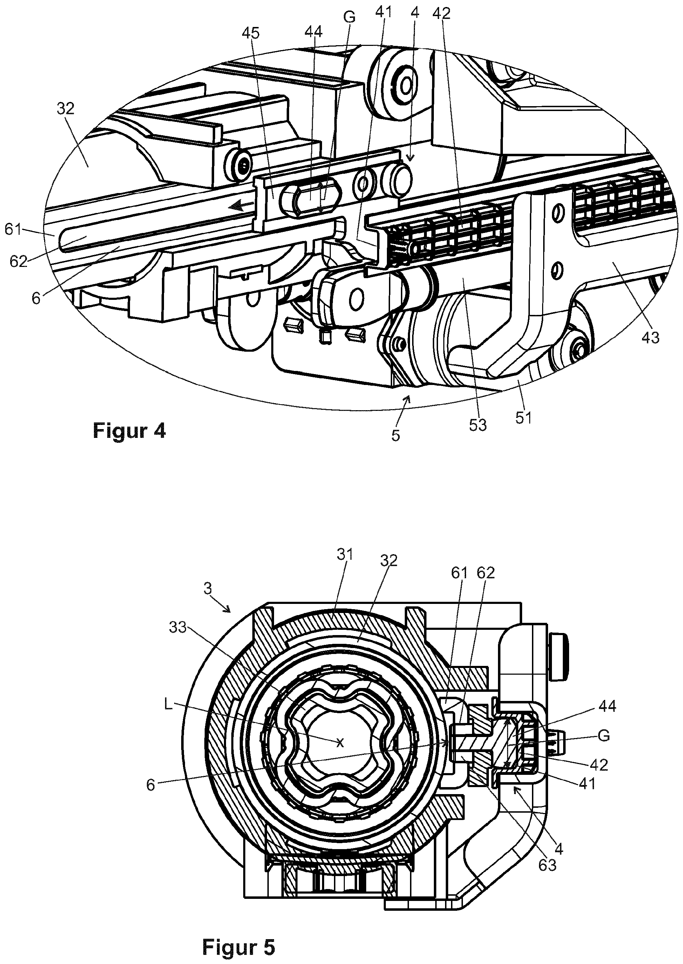

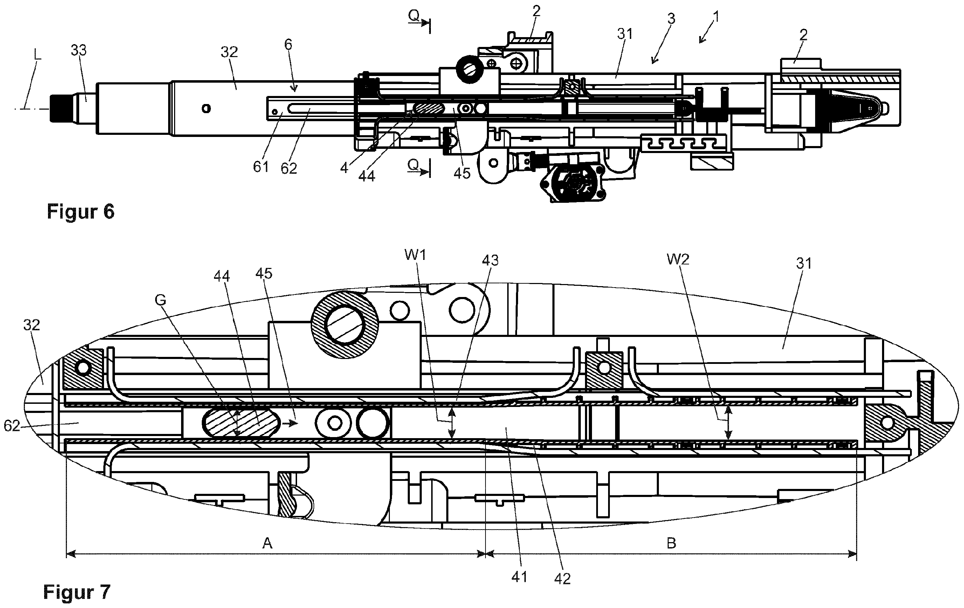

Figur 3 zeigt eine teilweise schematisch aufgeschnittene Lenksäule 1 in einer Ansicht von links (der in Figur 2 und 3 sichtbaren Seite), und Figur 5 eine vergrößerte Ansicht daraus. Figur 5 zeigt eine Querschnittansicht Q-Q gemäß Figur 6 oder 2.

Die Lenksäule 1 umfasst eine zweiteilige Trageinheit 2 mit Befestigungsmitteln, nämlich Befestigungsöffnungen 21 zur Anbringung an einer nicht dargestellten Fahrzeugkarosserie.

Von der Trageinheit 2 ist eine Manteleinheit 3 gehalten, welche einen karosserieseitig, in Fahrtrichtung vorn liegenden, auch als unteren Mantel bezeichneten Außenmantel 31, und einen auch als oberen Mantel bezeichneten Innenmantel 32 aufweist. In dem Innenmantel 32 ist um eine in Längsrichtung erstreckte Längsachse L eine Lenkspindel 33 drehbar gelagert, die an ihrem hinteren Endabschnitt einen Anschlussabschnitt 34 zur Anbringung eines nicht dargestellten Lenkrads aufweist.

Der Innenmantel 32 ist als Mantelrohr mit einem Grundkörper mit einem runden Rohrquerschnitt ausgebildet und ist zur Längsverstellung in dem Außenmantel 31 aufgenommen und in Längsrichtung teleskopartig verstellbar, wie mit dem Doppelpfeil angedeutet. In einer Einstellposition, die einer Betriebs- oder Bedienposition, wie in den Figuren dargestellt, ist der Mantel relativ weit aus dem Außenmantel herausgezogen, also in Figur 1 nach rechts und in den Figuren 2 bis 4 und 6 bis 8 nach rechts.

Zur Längsverstellung ist ein motorischer Verstellantrieb 5 vorgesehen, der als Spindeltrieb ausgebildet ist mit einer von einem elektrischen Motor 51 drehend antreibbaren, an dem Außenmantel 31 in Längsrichtung abgestützten Spindelmutter 52, in die eine in Längsrichtung erstreckte, an dem Innenmantel 32 in Längsrichtung und drehfest festgelegte Gewindespindel 53 eingreift.

Eine erfindungsgemäße Führungseinrichtung 4 umfasst eine Führungsbahn, die in Längsrichtung langgestreckte, Führungsnut 41 ausgebildet ist. Diese Führungsnut 41 hat einen radial zur Längsachse hin offenen Nutquerschnitt, auch als Führungsquerschnitt bezeichnet, und ist in einem Führungsbahnkörper 42 eingeformt, der mittels eines Trägerelements 43 in Längsrichtung und in Umfangsrichtung bezüglich der Längsachse L fix an dem Außenmantel 31 festgelegt ist.

An dem Innenmantel 32 ist radial bezüglich der Längsachse L vorstehend ein Führungselement in Form eines Führungsvorsprungs 44 in Längs- und Umfangsrichtung fixiert. Der Führungsvorsprung 44 hat die Form eines in Längsrichtung länglichen Zapfens mit einer Breite G quer zur Längsrichtung, d.h. in Umfangsrichtung gemessen. Der Führungsvorsprung 44 ragt von einem Führungselementkörper 45 radial nach außen vor und taucht von innen derart in die Führungsnut 41 ein, dass er in Längsrichtung darin beweglich zwangsgeführt ist, d.h. formschlüssig in Umfangsrichtung gestützt ist.

Der Führungsbahnkörper 42 kann zumindest im Bereich der Führungsnut 41 aus einem Kunststoff ausgebildet sein. Alternativ oder zusätzlich kann der Führungsvorsprung 44 zumindest im Kontaktbereich mit der Führungsnut 41 aus einem Kunststoff ausgebildet sein. Alternativ kann ein Metall eingesetzt sein oder der Führungsbahnkörper 42 ist aus einem Metall gebildet, beispielsweise als Gussbauteil oder Strangpressteil.

Der Führungselementkörper 45 ist über eine Energieabsorptionseinrichtung 6 im normalen Betriebszustand außen an dem Innenmantel 32 in Längs- und Umfangsrichtung fixiert. Die Energieabsorptionseinrichtung 6 weist eine an dem Innenmantel 32 fest angebrachte Profilschiene 61 auf, die einen in Längsrichtung langgestreckten Schlitz 62 aufweist. In diesen Schlitz 62 ist ein bolzenförmiges Aufweitelement 63 eingepresst, welches auf der dem Führungsvorsprung 44 abgewandten Innenseite des Führungselementkörpers 45 vorsteht. Dadurch, dass das Aufweitelement 63 relativ zur Breite des Schlitzes 62 Übermaß hat, und unter lokaler Deformierung in den Schlitz 62 eingepresst ist, ist der der Führungselementkörper 45 über die Profilschiene in Längsrichtung am Innenmantel 32 fixiert. Die Gewindespindel 53 des Verstellantriebs 5 greift über diesen Führungselementkörper 45 und die Energieabsorptionseinrichtung 6 zur Längsverstellung an dem Innenmantel 32 an. Nur in einem Crashfall, wenn der Innenmantel 32 mit einer extrem hohen Kraftspitze in den Außenmantel 31 hineingeschoben wird, wird das Aufweitelement 63 unter plastischer Aufweitung in Längsrichtung durch den Schlitz 62 quasi entlanggepflügt, wie in Figur 4 mit dem Pfeil angedeutet ist, wobei kinetische Energie absorbiert wird.

Im normalen Verstellbetrieb ist der Führungsvorsprung 44 in der Führungsnut 41 gleitend geführt, wie gut in dem Querschnitt Q-Q von Figur 5 erkennbar ist.

In Figur 6 und in der vergrößerten Darstellung von Figur 7 ist zur besseren Erkennbarkeit das Trägerelement 43 weggelassen, und der Trägerelementkörper 42 schematisch längs aufgeschnitten, d.h. von außen radial geöffnet dargestellt, so dass der Blick in die ansonsten nach außen geschlossene Führungsnut 41 freigegeben ist.

Erfindungsgemäß hat die Führungsnut 41 einen Funktionalabschnitt A, der sich über einen Teilabschnitt ihrer Länge erstreckt, welcher dem dargestellten Bedienbereich entspricht, in dem die Mäntel 31 und 32 in Längsrichtung relativ zueinander zur Einstellung der Lenkradposition verstellt werden können. In dem Funktionalabschnitt A hat die Führungsnut 41 quer zur Längsachse L, in Umfangsrichtung gemessen eine Nutweite W1. Diese Nutweite W1 ist mit einem geringen Führungsspiel auf die Breite G des Führungsvorsprungs 44 abgestimmt, so dass der Führungsvorsprung 44 in Längsrichtung gleitend geführt ist, und die Führung eine hohe Steifigkeit der Manteleinheit 3 erzeugt. Der Betrag des Führungsspiels ergibt sich aus der Differenz W1 - G.

An den Funktionalabschnitt A schließt sich in der Einschubrichtung, die mit dem Pfeil an dem Führungsvorsprung 44 angedeutet ist, und in welcher der Innenmantel 32 beim Zusammenfahren in den Außenmantel 31 hinein bewegt wird, ein Übergangsabschnitt B an. Der gesamte mögliche Verstellweg entspricht im Wesentlichen der Summe der Abschnitte A + B. Die Nutweite W2 in diesem Übergangsabschnitt B ist erfindungsgemäß größer als die Nutweite W1. Dadurch besteht zwischen dem Führungsvorsprung 44 und den Innenflanken der Führungsnut 41 ein größeres Führungsspiel, quer zur Längsachse L, in Umfangsrichtung gemessen, mit dem Betrag W2 - G. Es gilt: W1 < W2. Dadurch liegt beim Zusammenfahren außerhalb des Funktionalabschnitts A beim Eintritt in den Übergangsabschnitt B ein loser Formschluss der Führung vor, so dass die Reibung der Führung geringer ist. Die dadurch bedingte geringere Steifigkeit der Manteleinheit 3 ist akzeptabel, da der Übergangsabschnitt B nur beim Verstauen in die zusammengefahrene Verstauposition, und beim Herausfahren in die Bedienposition kurzzeitig durchlaufen wird, wobei keine Betätigung der Lenkung erfolgt.

Bevorzugt weist der Führungsvorsprung 44 im Übergangsabschnitt B zusätzlich einen Abstand zu dem Nutboden der Führungsnut 41 auf, und im Funktionalabschnitt A weist der Führungabschnitt 44 Kontakt zu dem Nutboden der Führungsnut 41 auf, wie in der Figur 5 zu erkennen ist. Somit wird das Spiel zwischen dem Führungsvorsprung 44 und der Führungsnut 41 nicht alleinig durch den Kontakt des Führungsvorsprungs 44 an den Nutflanken der Fürungsnut 41 bestimmt, sondern zusätzlich durch den Kontakt bzw. dem vorhandenen Spiel des Führungsvorsprungs 44 zu dem Nutboden der Führungsnut 41.

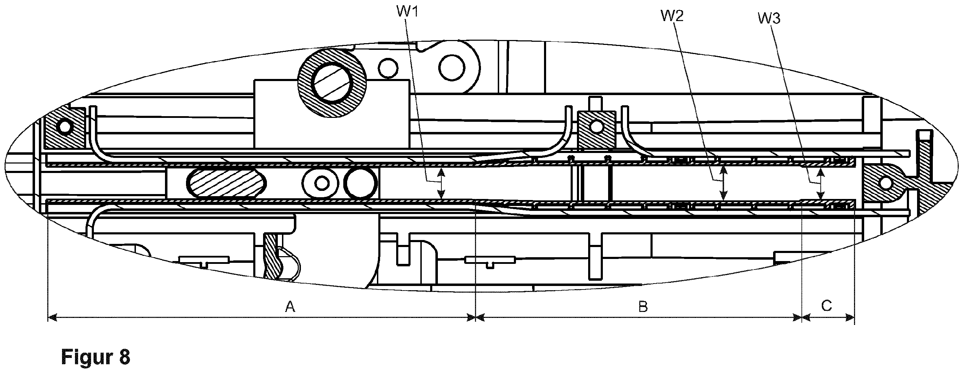

In der in Figur 8 gezeigten Weiterbildung befindet sich am anderen, dem Funktionalabschnitt A entgegengesetzten Endbereich des Verstellwegs im Anschluss an den Übergangsabschnitt B ein weiterer Funktionalabschnitt C, der einer zusammengefahrenen Verstauposition entspricht. Der gesamte mögliche Verstellweg entspricht somit im Wesentlichen der Summe der Abschnitte A + B + C. In dem Verstaubereich C hat die Führungsnut 41 eine Nutweite W3, die kleiner ist als die Nutweite W2 in dem Übergangsabschnitt B, wodurch eine spielarme Führung und Halterung in der Verstauposition ermöglicht ist Es gilt: W2 > W3. Dabei ist die Steifigkeit in dem Verstaubereich C nicht so maßgeblich wie in dem Bedienbereich A, so dass W3 größer sein kann als W1, und es gilt: W2 > W3 > W1. Es kann auch vorgesehen sein, dass W1 = W3 und W2 > W3 und W2 > W1 ist.

### Bezugszeichenliste

- 1: Lenksäule
- 2: Trageinheit
- 21: Befestigungsöffnungen
- 3: Manteleinheit
- 31: Außenmantel
- 32: Innenmantel
- 33: Lenkspindel
- 34: Anschlussabschnitt
- 4: Führungseinrichtung
- 41: Führungsnut
- 42: Führungsbahnkörper
- 43: Trägerelement
- 44: Führungsvorsprung
- 45: Führungselementkörper
- 5: Verstellantrieb
- 51: Motor
- 52: Spindelmutter
- 53: Gewindespindel
- 6: Energieabsorptionseinrichtung
- 61: Profilschiene
- 62: Schlitz
- L: Längsachse
- G: Breite Führungsvorsprung 44
- A, C: Funktionalabschnitt
- B: Übergangsabschnitt
- W1: Nutweite A
- W2: Nutweite B
- W3: Nutweite C

## Patentansprüche

1. Lenksäule (1) für ein Kraftfahrzeug, umfassend eine Manteleinheit (3), in der eine Lenkspindel (33) um eine in Längsrichtung erstreckte Längsachse (L) drehbar gelagert ist und die mindestens zwei in Längsrichtung um einen Verstellweg relativ zueinander verstellbar geführte Mäntel (31, 32) aufweist, wobei in einem als Übergangsabschnitt ausgebildeten Teilabschnitt des Verstellwegs die Mäntel (31, 32) mit einem größeren Spiel geführt sind als in einem als Funktionalabschnitt ausgebildeten Teilabschnitt des Verstellwegs,
**dadurch gekennzeichnet,**
**dass** ein Mantel (31) eine Führungsbahn (41) aufweist, und ein anderer Mantel (32) ein Führungselement (44) aufweist, welches in Längsrichtung geführt in die Führungsbahn (41) eingreift und dabei in der Führungsbahn (41) ein Führungsspiel (W1-G, W2-G, W3-G) hat, welches in einem Übergangsabschnitt (B) größer ist als in einem Funktionalabschnitt (A, C).

2. Lenksäule nach Anspruch 1, **dadurch gekennzeichnet, dass** die Führungsbahn (41) und das Führungselement (44) einen in Umfangsrichtung wirksamen Formschluss ausbilden.

3. Lenksäule nach einem der vorangehenden Ansprüche, **dadurch gekennzeichnet, dass** das Führungsspiel (W1-G, W2-G, W3-G) zwischen der Führungsbahn (41) und dem Führungselement (44) im Umfangsrichtung besteht.

4. Lenksäule nach einem der vorangehenden Ansprüche, **dadurch gekennzeichnet, dass** die Führungsbahn (41) eine langgestreckte Führungsnut (41) aufweist, in die ein Führungsvorsprung (44) des Führungselements (44) eingreift, und die abschnittweise einen kleinere Nutweite (W1, W3) hat.

5. Lenksäule nach einem der vorangehenden Ansprüche, **dadurch gekennzeichnet, dass** die Führungsbahn einen langgestreckten Führungsvorsprung aufweist, der in eine Führungsausnehmung des Führungselements eingreift, und der abschnittweise eine größere Stegbreite hat.

6. Lenksäule nach einem der vorangehenden Ansprüche, **dadurch gekennzeichnet, dass** ein geringeres Führungsspiel (W1-G, W2-G, W3-G) in einem Endabschnitt oder in beiden Endabschnitten der Führungsbahn (41) ausgebildet ist.

7. Lenksäule nach einem der vorangehenden Ansprüche, **dadurch gekennzeichnet, dass** die Führungsbahn (41) einen Führungsbahnkörper (42) und/oder das Führungselement (44) einen Führungselementkörper (45) aufweisen, der an einem Mantel (31, 32) angebracht oder ausgebildet ist.

8. Lenksäule nach Anspruch 7, **dadurch gekennzeichnet, dass** der Führungsbahnkörper (42) und/oder der Führungselementkörper (45) separat ausgebildet und mit einem Mantel (31, 32) verbunden ist.

9. Lenksäule nach einem der vorangehenden Ansprüche 7 oder 8, **dadurch gekennzeichnet, dass** der Führungsbahnkörper (42) und/oder der Führungselementkörper (45) aus einem von einem Mantel (31, 32) unterschiedlichen Material ausgebildet sind.

10. Lenksäule nach Anspruch 9 einem der vorangehenden Ansprüche, **dadurch gekennzeichnet, dass** das Material einen Kunststoff umfasst.

11. Lenksäule nach einem der vorangehenden Ansprüche, **dadurch gekennzeichnet, dass** die Mäntel (31, 32) mindestens einen oberen Mantel (32) und einen unteren Mantel (31) umfassen.

12. Lenksäule nach Anspruch 11, **dadurch gekennzeichnet, dass** zwischen dem oberen Mantel (32) und dem unteren Mantel (31) mindestens ein Zwischenmantel angeordnet ist.

13. Lenksäule nach einem der vorangehenden Ansprüche, **dadurch gekennzeichnet, dass** die Mäntel (31, 32) teleskopierbare Mantelrohre (31, 32) umfassen.

14. Lenksäule nach einem der vorangehenden Ansprüche, **dadurch gekennzeichnet**, das ein motorischer Verstellantrieb (6) vorgesehen ist, der derart mit den Mänteln (31, 32) gekoppelt ist, um die Mäntel (31, 32) relativ zueinander zu verstellen.

15. Lenksäule nach einem der vorangehenden Ansprüche, **dadurch gekennzeichnet, dass** zwischen der Führungsbahn (41) oder dem Führungselement (44) und einem Mantel (32) eine Energieabsorptionseinrichtung (6) angeordnet ist.

## Claims

1. A steering column (1) for a motor vehicle, comprising a casing unit (3) in which a steering spindle (33) is mounted so as to be rotatable about a longitudinal axis (L) extending in the length direction and which has at least two casings (31, 32) which are adjustably guided relative to one another about an adjustment travel in the length direction, wherein in a part portion of the adjustment travel configured as a transitional portion, the casings (31, 32) are guided with a greater play than in a part portion of the adjustment travel configured as a functional portion,
**characterized in that**
one casing (31) has a guide track (41) and another casing (32) has a guide element (44) which engages in the guide track (41) and is guided in the length direction and has a guide play (W1-G, W2-G, W3-G) in the guide track (41) which is greater in a transitional portion (B) than in a functional portion (A, C).

2. The steering column as claimed in claim 1, **characterized in that** the guide track (41) and the guide element (44) constitute a form-fit connection active in the circumferential direction.

3. The steering column as claimed in any of the preceding claims, **characterized in that** the guide play (W1-G, W2-G, W3-G) between the guide track (41) and the guide element (44) exists in the circumferential direction.

4. The steering column as claimed in any of the preceding claims, **characterized in that** the guide track (41) has an elongate guide groove (41) in which a guide protrusion (44) of the guide element (44) engages and which in portions has a smaller groove width (W1, W3).

5. The steering column as claimed in any of the preceding claims, **characterized in that** the guide track has an elongate guide protrusion which engages in a guide recess of the guide element and which in portions has a greater web width.

6. The steering column as claimed in any of the preceding claims, **characterized in that** a smaller guide play (W1-G, W2-G, W3-G) is formed in one end portion or in both end portions of the guide track (41).

7. The steering column as claimed in any of the preceding claims, **characterized in that** the guide track (41) has a guide track body (42) and/or the guide element (44) has a guide element body (45) which is arranged or formed on a casing (31, 32).

8. The steering column as claimed in claim 7, **characterized in that** the guide track body (42) and/or the guide element body (45) are formed separately and connected to a casing (31, 32).

9. The steering column as claimed in one of the preceding claims 7 or 8, **characterized in that** the guide track body (42) and/or the guide element body (45) are made from a material different from that of a casing (31, 32).

10. The steering column as claimed in claim 9, **characterized in that** the material comprises a plastic.

11. The steering column as claimed in any of the preceding claims, **characterized in that** the casings (31, 32) comprise at least an upper casing (32) and a lower casing (31).

12. The steering column as claimed in claim 11, **characterized in that** at least one intermediate casing is arranged between the upper casing (32) and the lower casing (31).

13. The steering column as claimed in any of the preceding claims, **characterized in that** the casings (31, 32) comprise telescopic casing tubes (31, 32).

14. The steering column as claimed in any of the preceding claims, **characterized in that** a motorized adjustment drive (6) is provided which is coupled to the casings (31, 32) so as to adjust the casings (31, 32) relative to one another.

15. The steering column as claimed in any of the preceding claims, **characterized in that** an energy absorption device (6) is arranged between the guide track (41) or the guide element (44) and a casing (32).

## Revendications

1. Colonne de direction (1) pour un véhicule automobile, comprenant une unité de boîtier (3) dans laquelle une broche de direction (33) est montée de manière à pouvoir tourner autour d'un axe longitudinal (L) s'étendant dans le sens de la longueur et qui comporte au moins deux boîtiers (31, 32) guidés de manière réglable l'un par rapport à l'autre autour d'une course de réglage dans le sens de la longueur, dans laquelle, dans une partie de la course de réglage configurée comme une partie transitoire, les boîtiers (31, 32) sont guidés avec un jeu plus important que dans une partie de la course de réglage configurée comme une partie fonctionnelle,
**caractérisé en ce que**
un boîtier (31) a un rail de guidage (41) et un autre boîtier (32) a un élément de guidage (44) qui s'engage dans le rail de guidage (41) et est guidé dans la direction de la longueur et a un jeu de guidage (W1-G, W2-G, W3-G) dans le rail de guidage (41) qui est plus grand dans une partie transitoire (B) que dans une partie fonctionnelle (A, C).

2. Colonne de direction selon la revendication 1, **caractérisée par le fait que** le rail de guidage (41) et l'élément de guidage (44) constituent une liaison de forme active dans la direction circonférentielle.

3. Colonne de direction selon l'une quelconque des revendications précédentes, **caractérisée en ce que** le jeu de guidage (W1-G, W2-G, W3-G) entre le rail de guidage (41) et l'élément de guidage (44) existe dans la direction circonférentielle.

4. Colonne de direction selon l'une quelconque des revendications précédentes, **caractérisée en ce que** le rail de guidage (41) présente une rainure de guidage allongée (41) dans laquelle une saillie de guidage (44) de l'élément de guidage (44) s'engage et qui présente en partie une largeur de rainure plus petite (W1, W3).

5. Colonne de direction selon l'une quelconque des revendications précédentes, **caractérisée par le fait que** le rail de guidage présente une saillie de guidage allongée qui s'engage dans une cavité de guidage de l'élément de guidage et qui, par endroits, présente une largeur de bande plus importante.

6. Colonne de direction selon l'une quelconque des revendications précédentes, **caractérisée en ce qu'**un jeu de guidage plus petit (W1-G, W2-G, W3-G) est formé dans une partie d'extrémité ou dans les deux parties d'extrémité du rail de guidage (41).

7. Colonne de direction selon l'une quelconque des revendications précédentes, **caractérisée en ce que** le rail de guidage (41) comporte un corps de rail de guidage (42) et/ou l'élément de guidage (44) comporte un corps d'élément de guidage (45) qui est disposé ou formé sur un boîtier (31, 32).

8. Colonne de direction selon la revendication 7, **caractérisée par le fait que** le corps de la voie de guidage (42) et/ou le corps de l'élément de guidage (45) sont formés séparément et reliés à un boîtier (31, 32).

9. Colonne de direction selon l'une des revendications précédentes 7 ou 8, **caractérisée par le fait que** le corps du rail de guidage (42) et/ou le corps de l'élément de guidage (45) sont fabriqués dans un matériau différent de celui du boîtier (31, 32).

10. Colonne de direction selon la revendication 9, **caractérisée en ce que** le matériau comprend une matière plastique.

11. Colonne de direction selon l'une quelconque des revendications précédentes, **caractérisée en ce que** les boîtiers (31, 32) comprennent au moins un boîtier supérieur (32) et un boîtier inférieur (31).

12. Colonne de direction selon la revendication 11, **caractérisée en ce qu'**au moins un carter intermédiaire est disposé entre le carter supérieur (32) et le carter inférieur (31).

13. Colonne de direction selon l'une quelconque des revendications précédentes, **caractérisée en ce que** les boîtiers (31, 32) comprennent des tubes télescopiques (31, 32).

14. Colonne de direction selon l'une quelconque des revendications précédentes, **caractérisée par** la présence d'une commande de réglage motorisée (6) couplée aux boîtiers (31, 32) de manière à régler les boîtiers (31, 32) l'un par rapport à l'autre.

15. Colonne de direction selon l'une quelconque des revendications précédentes, **caractérisée en ce qu'**un dispositif d'absorption d'énergie (6) est disposé entre le rail de guidage (41) ou l'élément de guidage (44) et un carter (32).
